(19) Europäisches Patentamt
European Patent Office
Office européen des brevets

(11) Veröffentlichungsnummer: **0 281 501 B1**

(12)
# EUROPÄISCHE PATENTSCHRIFT

(45) Veröffentlichungstag der Patentschrift :
26.06.91 Patentblatt 91/26

(51) Int. Cl.⁵ : **G03B 27/52**

(21) Anmeldenummer : **88730016.8**

(22) Anmeldetag : **21.01.88**

(54) **Optische Abtasteinrichtung.**

(30) Priorität : **30.01.87 DE 3703217**

(43) Veröffentlichungstag der Anmeldung :
**07.09.88 Patentblatt 88/36**

(45) Bekanntmachung des Hinweises auf die
Patenterteilung :
**26.06.91 Patentblatt 91/26**

(84) Benannte Vertragsstaaten :
**AT BE CH DE ES FR GB IT LI LU NL SE**

(56) Entgegenhaltungen :
**DE-A- 3 111 746**
**GB-A- 2 061 536**
**GB-A- 2 161 288**

(56) Entgegenhaltungen :
**US-A- 4 316 665**
**US-A- 4 448 514**
**US-A- 4 511 237**
**PATENT ABSTRACTS OF JAPAN, Band 8, Nr.
17 (E-223)[1454], 25. Januar 1984; & JP-A-58
178 660 (TOKYO SHIBAURA DENKI K.K.) 19-
10-1983**

(73) Patentinhaber : **Siemens Aktiengesellschaft
Wittelsbacherplatz 2
W-8000 München 2 (DE)**

(72) Erfinder : **Dreinhoff, Karl-Heinz, Dipl.-Ing.
Grunewaldstrasse 10-11
W-1000 Berlin 20 (DE)**
Erfinder : **Meinhof, André-Heinrich, Dipl.-Ing.
Pannierstrasse 7
W-1000 Berlin 44 (DE)**

## Beschreibung

Die Erfindung betrifft eine optische Abtasteinrichtung mit einer transparenten Auflageplatte für eine zeilenweise abzutastende Vorlage, mit Gestellteilen und mit einem eine zeilenförmige Lichtempfangseinrichtung tragenden Abtastschlitten, der unterhalb der Auflageplatte auf zwei parallelen Führungselementen quer zur Zeilenrichtung und parallel zur Auflageplatte verfahrbar gelagert ist.

Bei einer derartigen, beispielsweise aus der DE-OS 31 41 452 und darüber hinaus allgemein aus der Kopiertechnik bekannten Abtasteinrichtung dient eine transparente Auflageplatte aus Glas als Auflage für eine abzutastende Vorlage. Unterhalb der Auflageplatte ist ein Abtastschlitten auf zwei parallelen, als runde Führungsstangen ausgebildeten Führungselementen parallel zur Auflageplatte verfahrbar gelagert. Auf dem Abtastschlitten ist eine zeilenförmige Lichtempfangseinrichtung in Form eines Abtastspiegels angeordnet, der bei einer Verfahrbewegung des Abtastschlittens die Vorlage unter Zwischenschaltung eines feststehenden optischen Abbildungssystems Zeile für Zeile auf einen feststehenden optoelektronischen Bildsensor projiziert. Durch einen vergleichsweise langen Strahlengang zwischen der auf der Auflageplatte liegenden Vorlage und dem optischen Abbildungssystem wird eine scharfe zeilenweise Abbildung der Vorlage auf dem Bildsensor erzielt.

Um ohne die aufwendige Zwischenschaltung eines optischen Abbildungssystems eine Vorlage zeilenweise abtasten zu können, ist es aus der DE-PS 31 11 746 bekannt, die Vorlage in einen Spalt zwischen einer Förderwalze und einer zeilenförmigen Lichtempfangseinrichtung in Form einer Fotodiodenreihe einzuführen und durch Drehen der Förderwalze die Vorlage in Kontakt mit der Lichtempfangseinrichtung an dieser vorbeizuführen. Eine derartige Abtasteinrichtung ist jedoch nur zur optischen Abtastung einzelner loser Vorlagenblätter geeignet.

Gemäß der Erfindung ist bei der optischen Abtasteinrichtung der eingangs angegebenen Art vorgesehen, daß die beiden Führungselemente jeweils als eines der Gestellteile mit einer Führungsbahn als Auflage für den Abtastschlitten und mit zumindest einer der Führungsbahn zugewandten Anlagefläche ausgebildet sind und daß die Auflageplatte mit ihrer Auflagefläche für die Vorlage unter Einwirkung von Andruckelementen stellenweise an den Anlageflächen anliegt.

Ein wesentlicher Vorteil der erfindungsgemäßen Abtasteinrichtung besteht darin, daß sie einen sehr genauen Abstand zwischen der abzutastenden Vorlage und der Lichtempfangseinrichtung innerhalb eines sehr geringen Toleranzbereiches gewährleistet. Dieses wird dadurch ermöglicht, daß der Abstand zwischen den Führungsbahnen als Auflageflächen für den die Lichtempfangseinrichtung tragenden Abtastschlitten und den Anlageflächen für die Auflagefläche der Auflageplatte aufgrund der erfindungsgemäßen Halterung von Abtastschlitten und Auflageplatte in den beiden Gestellteilen lediglich durch ein einziges bei der Herstellung der Gestellteile verwendetes werkzeuggebundenes Maß bestimmt ist, durch das der Abstand zwischen der Führungsbahn und der Anlagefläche der jeweiligen Profilschiene bestimmt wird ; darüber hinaus hat nur noch der Aufbau des Abtastschlittens einen Einfluß auf die Toleranz des Abstandes zwischen der Vorlage und der Lichtempfangseinrichtung.

Dadurch, daß bei der erfindungsgemäßen Abtasteinrichtung außer den beiden Gestellteilen keine weiteren, den Abstand zwischen der Auflagefläche für die Vorlage und der Führungsbahn für den Abtastschlitten beeinflussenden Teile vorhanden sind, besteht die vorteilhafte Möglichkeit, alle übrigen Gehäuseteile der Abtasteinrichtung mit wesentlich größeren Toleranzen einfacher und billiger herzustellen.

Ein weiterer Vorteil besteht darin, daß aufwendige Justierarbeiten an den Führungselementen für den Abtastschlitten zum Einstellen des Abstandes zwischen der Auflagefläche der Auflageplatte und der Lichtempfangseinrichtung entfallen, weil mit dem Aufsetzen des vorjustierten Abtastschlittens auf die Führungsbahnen der beiden Gestellteile zugleich der Abstand zwischen der Auflagefläche der Auflageplatte und der Lichtempfangseinrichtung endgültig festgelegt wird, so daß keine weiteren Justierarbeiten erforderlich sind.

Im Hinblick auf die enge Toleranz, innerhalb derer bei der erfindungsgemäßen Abtasteinrichtung der Abstand zwischen der abzutastenden Vorlage und der abtastenden Lichtempfangseinrichtung einstellbar ist, besteht gemäß einer vorteilhaften Ausbildung der erfindungsgemäßen Vorrichtung die Lichtempfangseinrichtung aus einem optoelektronischen Zeilensensor, der auf dem Abtastschlitten unmittelbar unter der Auflageplatte angeordnet ist. Dabei wird ohne eine zusätzliche optische Abbildungsvorrichtung aufgrund der exakten Einhaltung des Abstandes von dem Zeilensensor zur Vorlage stets eine scharfe Abbildung gewährleistet.

Bei einer, sich durch einen besonders einfachen Aufbau auszeichnenden Ausbildung der erfindungsgemäßen Abtasteinrichtung sind beide Gestellteile jeweils in Form einer Platte mit Aussparungen ausgebildet, wobei die Führungsbahnen und Anlageflächen Kanten der Aussparungen sind. Dabei handelt es sich bei den Platten vorzugsweise um Blechteile, deren Ausnehmungen mit hoher Genauigkeit im Sinne der exakten Einhaltung des Abstandes zwischen den Führungsbahnen für den Abtastschlitten und den Anlageflächen für die Auflageplatte ausgestanzt sind. Als Andruckelemente sind beim Stanzen in den Platten ausgebildete Ansätze denkbar, die die Auflageplatte an ihrer von der Auflagefläche abgewandten Seite untergreifen und gegen die Anlageflächen drücken.

Gemäß einer bevorzugten Ausbildung der erfindungsgemäßen Abtasteinrichtung ist vorgesehen, daß die beiden Gestellteile jeweils Profilschienen sind, die an ihren einander zugewandten Seiten jeweils einen ersten Vorsprung mit der Führungsbahn aufweisen, daß ferner beide Profilschienen an ihren einander zugewandten Seiten jeweils einen zweiten Vorsprung mit der Anlagefläche in paralleler Ausrichtung zur Führungsbahn aufweisen und daß die Auflageplatte an zwei parallelen Kanten mit ihrer Auflagefläche an den Anlageflächen anliegt.

Im Unterschied zu den runden Führungsstangen für den Abtastschlitten, wie sie bei der erstgenannten bekannten Abtasteinrichtung vorgesehen sind, weisen die Profilschienen in der erfindungsgemäßen Abtasteinrichtung in Richtung ihrer Gewichtsbelastung durch den Abtastschlitten ein hohes Widerstandsmoment auf und biegen sich daher kaum durch. Darüber hinaus haben selbst geringfügige Durchbiegungen der Profilschienen oder sogar eine windschiefe Lage beider Profilschienen zueinander nur einen sehr geringen Einfluß auf die geforderte Abstandstoleranz zwischen Vorlage und Lichtempfangseinrichtung, weil die mit ihrer Auflagefläche an den Anlageflächen der beiden Profilschienen anliegende Auflageplatte entsprechend den Form- und Lageabweichungen der Profilschienen einschließlich der beiden Führungsbahnen für den Abtastschlitten mitverformt wird. Die beiden Profilschienen können wahlweise als Strangpreßprofile, Kunststoffspritzteile, Metalldruckgußteile oder als Blechbiegeprofile ausgebildet sein.

Eine sichere Halterung der Auflageplatte für die Vorlage wird unter Vermeidung zusätzlicher Einzelteile in vorteilhafter Weise dadurch erreicht, daß beide Profilschienen zwischen ihren ersten und zweiten Vorsprüngen jeweils einen dritten Vorsprung aufweisen, zwischen dem und der Auflageplatte das jeweilige Andruckelement angeordnet ist. Hierbei bilden in beiden Profilschienen jeweils der zweite und der dritte Vorsprung die Begrenzung einer Aufnahmenut, in der die Auflageplatte unter Zwischenlage des jeweiligen Andruckelementes in exakter Ausrichtung entlang der Anlagefläche des zweiten Vorsprungs gelagert ist.

In diesem Zusammenhang besteht das im allgemeinen als Federelement ausgebildete Andruckelement vorteilhafterweise aus einem elastischen Streifen, der in einer Nut des jeweiligen dritten Vorsprungs liegt. Der beispielsweise aus einem Gummischlauch bestehende Streifen gewährleistet im Bereich beider Profilschienen jeweils einen gleichmäßigen Andruck der Auflageplatte gegen die Anlagefläche des jeweils zweiten Vorsprunges der betreffenden Profilschiene.

Bei einer bevorzugten Ausbildung der erfindungsgemäßen Abtasteinrichtung ist der Abtastschlitten auf einer von beiden Führungsbahnen einfach und auf der jeweils anderen Führungsbahn zweifach gelagert. Auf diese Weise wird stets eine stabile Lagerung des Abtastschlittens und damit eine exakte Ausrichtung der Lichtempfangseinrichtung zur Vorlage gewährleistet.

Vorzugsweise weist der Abtastschlitten Rollen auf, mit denen er auf den Führungsbahnen aufliegt. Auf diese Weise wird eine besonders reibungs- und damit verschleißarme Führung des Abtastschlittens auf den jeweils ersten Vorsprüngen der beiden Profilschienen erreicht.

Gemäß einer zu der vorstehend genannten Rollenlagerung des Abtastschlittens alternativen Ausbildung der erfindungsgemäßen Abtasteinrichtung weist der Abtastschlitten Gleitstücke auf, mit denen er auf den Führungsbahnen aufliegt. Diese Art der Lagerung des Abtastschlittens zeichnet sich vor allem durch ihre konstruktive Einfachheit insbesondere im Hinblick auf die Einhaltung der Abstandstoleranz zwischen den Auflagepunkten der Gleitstücke auf den Führungsbahnen und der Lichtempfangseinrichtung aus.

Um bei der erfindungsgemäßen Abtasteinrichtung eine exakte zeilenweise Vorlagenabtastung zu gewährleisten, ist eine entsprechend genaue und spielfreie Ausrichtung des Abtastschlittens während seiner Verfahrbewegung quer zur Zeilenrichtung erforderlich. Bei Ausbildung der Gestellteile in Form der Profilschienen wird in diesem Zusammenhang unter Vermeidung zusätzlicher Einzelteile allein durch Mehrfachausnutzung der beiden Profilschienen eine exakte Ausrichtung des Abtastschlittens quer zu seiner Bewegungsrichtung dadurch erzielt, daß die Führungsbahnen seitlich durch ansatzförmige Führungsstreifen an den jeweils ersten Vorsprüngen der beiden Profilschienen begrenzt sind.

Um zusätzlich während der Verfahrbewegung des Abtastschlittens sicherzustellen, daß dieser in spielfreiem Kontakt auf den Führungsbahnen aufliegt, weist der Abtastschlitten in vorteilhafter Weise Gegenlager auf, die die jeweils ersten Vorsprünge der Profilschienen untergreifen. Die Gegenlager können dabei wahlweise unter Federeinwirkung oder auf Maß eingestellt an den jeweiligen Profilschienen anliegen.

Im Sinne der Mehrfachausnutzung der beiden Profilschienen weisen diese entsprechend einer vorteilhaften Weiterbildung der erfindungsgemäßen Abtasteinrichtung im Bereich zwischen den ersten und zweiten Vorsprüngen jeweils einen den Bewegungsspielraum des Abtastschlittens in Richtung auf die Auflageplatte begrenzenden Abschlag auf. Durch die Anschläge an den beiden Profilschienen wird verhindert, daß bei starken Erschütterungen der erfindungsgemäßen Abtasteinrichtung, wie z.B. Transporterschütterungen, der Abtastschlitten aus seiner Führung in den Profilschienen herausspringt.

Wie oben bereits erwähnt, äußert sich der besondere Vorteil der erfindungsgemäßen Abtasteinrichtung außer in der exakten Führung des Abtastschlittens in bezug auf die abzutastende Vorlage auch in der erheblichen Vereinfachung des Aufbaues der erfindungsgemäßen Abtasteinrichtung durch eine vielfache Ausnutzung der beiden Profilschienen. In diesem Zusammenhang ist gemäß einer besonders vorteilhaften Weiterbildung der erfindungsgemäßen Abtasteinrichtung vorgesehen, daß beide Profilschienen jeweils zur Aufnahme von Vorlagenführungseinrichtungen über die Begrenzung der Auflageplatte quer zur Zeilenrichtung hinausragen. Dabei wird die zur Aufnahme der transparenten Auflageplatte dienende Aufnahmenut zwischen dem jeweils zweiten und dritten Vorsprung der beiden Profilschienen, ohne daß ein zusätzlicher Aufwand entsteht, als Aufnahme für die Vorlagenführungseinrichtungen genutzt, die ebenso wie die Lichtempfangseinrichtung genau zur Auflagefläche für die Vorlage positioniert werden müssen ; zu den Vorlagenführungseinrichtungen zählen insbesondere Papierleitschienen, Klappdeckel oder Vorlagentransporteinrichtungen (feeder).

Zur Erläuterung der Erfindung wird im folgenden auf die Figuren Bezug genommen, von denen

Fig. 1 in schematischer perspektivischer Darstellung ein erstes Ausführungsbeispiel der erfindungsgemäßen Abtasteinrichtung zeigt und

Fig. 2 einen Schnitt durch das in Fig. 1 dargestellte Ausführungsbeispiel zeigt ; in

Fig. 3 ist ein weiteres Ausführungsbeispiel der erfindungsgemäßen Abtasteinrichtung schematisch dargestellt.

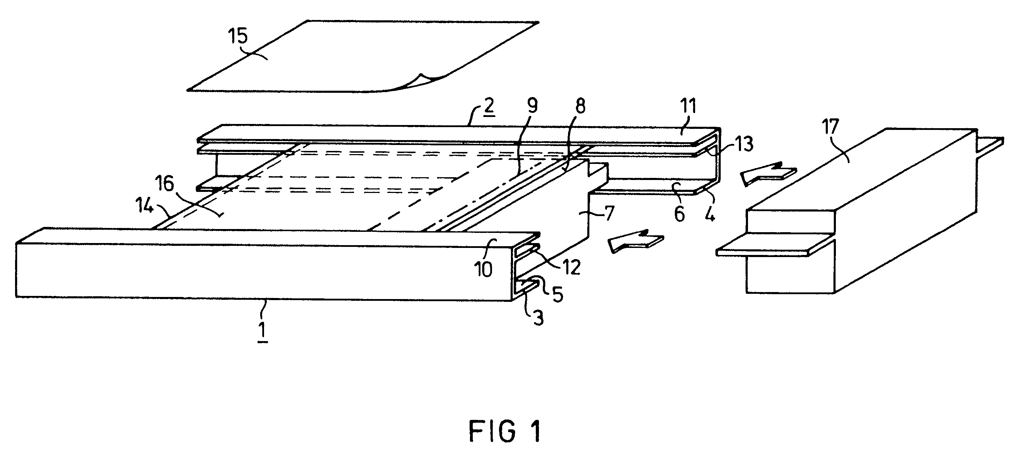

Fig. 1 zeigt in schematischer Darstellung ein Ausführungsbeispiel der erfindungsgemäßen Abtasteinrichtung mit zwei Gestellteilen 1 und 2 in Form von Profilschienen, die einander parallel gegenüberliegen. Jede der beiden Profilschienen 1 und 2 weist auf ihrer, der jeweils gegenüberliegen Profilschiene zugewandten Seite einen ersten Vorsprung 3 bzw. 4 auf, auf dem eine Führungsbahn 5 bzw. 6 für einen Abtastschlitten 7 ausgebildet ist. Der Abtastschlitten 7 ist auf den Führungsbahnen 5 und 6 aufliegend zwischen beiden Profilschienen 1 und 2 entlang dieser verfahrbar gelagert. Auf seiner Oberseite 8 trägt der Abtastschlitten 7 eine quer zu den Profilschienen 1 und 2 ausgerichtete, hier strichpunktiert angedeutete zeilenförmige der Lichtempfangseinrichtung 9, die aus einem optoelektronischen Zeilensensor besteht.

Die beiden Profilschienen 1 und 2 weisen oberhalb ihrer ersten Vorsprünge 3 und 4 jeweils einen zweiten Vorsprung 10 und 11 mit einer der jeweiligen Führungsbahn 5 bzw. 6 zugewandten und hier nicht sichtbaren Anlagefläche auf. Unterhalb des jeweils zweiten Vorsprunges 10 bzw. 11 der beiden Profilschienen 1 und 2 verläuft jeweils ein dritter Vorsprung 12 bzw. 13, der zusammen mit dem darüberliegenden zweiten Vorsprung 10 bzw. 11 eine Aufnahmenut für eine sich über dem Abtastschlitten 7 erstreckende transparente Auflageplatte 14 bildet. Die Auflageplatte 14 liegt im Bereich zweier paralleler Kanten mit ihrer nach oben weisenden und zur Aufnahme einer abzutastenden Vorlage 15 dienenden Auflagefläche 16 an den hier nicht sichtbaren Anlageflächen der jeweils zweiten Profilschienenvorsprüngen 10 und 11 an, wobei sie durch hier ebenfalls nicht sichtbare Andruckelemente zwischen den jeweils dritten Vorsprüngen 12 und 13 und der Auflageplatte 14 gegen die Anlageflächen der jeweils zweiten Vorsprünge 10 und 11 gedrückt wird.

Bei beiden Profilschienen 1 und 2 ergibt sich der Abstand zwischen der jeweiligen Führungsbahn 5 bzw. 6 des ersten Vorsprunges 3 bzw. 4 und der Anlagefläche des jeweils zweiten Vorsprunges 10 bzw. 11 aus einem einzigen, bei der Herstellung der Profilschienen 1 und 2 verwendeten werkzeuggebundenen Maß. Daher fehlt im Unterschied zu bekannten Abtasteinrichtungen das Erfordernis einer Justierung der Führungsbahnen, bezogen auf die Auflageplatte für die Vorlage. Da bezüglich des Abstandes zwischen den Führungsbahnen 5 und 6 und der Auflagefläche 16 der Auflageplatte 14 allein die Profilschienen 1 und 2 toleranzbestimmend sind, läßt sich die in Fig. 1 gezeigte Einheit komplett in ein hier nicht gezeigtes Gehäuse einbauen, welches mit wesentlich größeren Toleranzen besonders einfach und kostengünstig herstellbar ist.

Wie Fig. 1 zeigt, ragen die Profilschienen 1 und 2 über die zeilenrichtungsparallelen Kanten der Auflageplatte 14 hinaus, so daß in die zwischen den jeweils zweiten Vorsprüngen 10 bzw. 11 und den dritten Vorsprüngen 12 und 13 ausgebildeten Aufnahmenuten der Profilschienen 1 und 2 eine hier nur andeutungsweise dargestellte Vorlagenführungseinrichtung 17, wie z.B. eine Papierleitschiene oder eine Vorlagentransporteinrichtung (feeder) in genau definierter Lage zur Auflagefläche 16 der Auflageplatte 14 eingeführt werden kann.

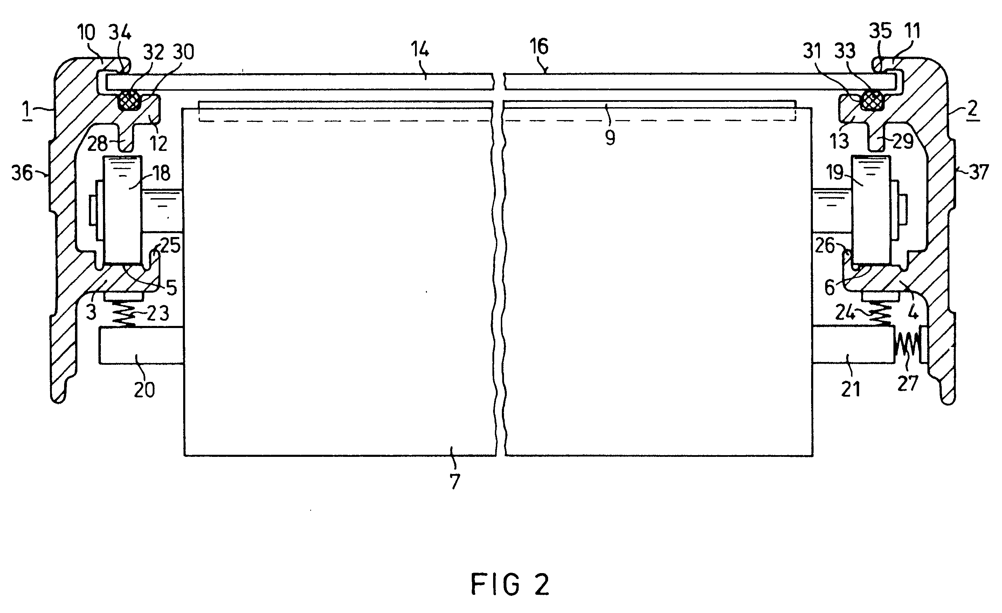

Fig. 2 zeigt in detailierter Darstellung das Ausführungsbeispiel der erfindungsgemäßen Abtasteinrichtung nach Fig. 1 in einem quer zu den Profilschienen 1 und 2 verlaufenden Schnitte. Im einzelnen sind die beiden einander parallel gegenüberliegenden Profilschienen 1 und 2 zu sehen, von denen jede auf ihrer der jeweils anderen Profilschiene zugewandten Seite jeweils den ersten Vorsprung 3 bzw. 4, den zweiten Vorsprung 10 bzw. 11 und den dritten Vorsprung 12 bzw. 13 aufweist. Auf den Oberseiten der ersten Vorsprünge 3 und 4 ist jeweils eine Führungsbahn 5 bzw. 6 ausgebildet, auf der die Lichtempfangseinrichtung 9 tragende Abtastschlitten 7 mit drei Rollen aufliegt, von denen hier lediglich zwei Rollen 18 und 19 zu sehen sind ; dabei liegt der Abtastschlitten 7 mit jeweils zwei Rollen auf der Führungsbahn 6 und mit einer einzigen Rolle auf der Führungsbahn 5 auf. Im Bereich beider Profilschienen 1 und 2 weist der Abtastschlitten 7 ferner zwei Gegenlager 20 und 21 auf, die die jeweils ersten Vorsprünge 3 und 4 der Profilschienen 1 und 2 untergreifen. Die beiden Gegenlager 20 und 21 weisen Federelemente 23 und 24 auf, die an den Unterkanten der beiden ersten Vorsprünge 3 und 4 angreifen und so den Abtastschlitten 7 mit seinen Rollen 18 und 19 auf die Führungsbahnen 5 und 6 drücken. Um eine, bezogen auf die Zeilenrichtung, spielfreie Lagerung des Abtastschlittens 7 zu ermöglichen, sind die Führungsbahnen 5 und 6 seitlich durch ansatzförmige Führungsstreifen 25 und 26 an den jeweils ersten Vorsprüngen 3 und 4 der beiden Profilschienen 1 und 2 begrenzt ; das Gegenlager 21 weist ein weiteres Federelement 27 auf, das sich seitlich an der Profilschiene 2 abstützend den Abtastschlitten 7 an dem Führungsstreifen 26 ausrichtet. Die jeweils dritten Vorsprünge 12 und 13 sind jeweils mit einem Anschlag 28 und 29 versehen, der den Bewegungsspielraum des Abtastschlittens 7 von den Führungsbahnen 5 und 6 weg begrenzt.

Der dritte Vorsprung 12 der Profilschiene 1 und der dritte Vorsprung 13 der Profilschiene 2 weisen auf ihrer Oberseite jeweils eine Nut 30 und 31 auf, in der ein elastischer Streifen 32 bzw. 33, beispielsweise aus Gummi bestehend, liegt. Die beiden elastischen Streifen 32 und 33 bilden Andruckelemente, welche die transparente Auflageplatte 14 mit ihrer Auflagefläche 16 für die hier nicht gezeigte Vorlage gegen die den Führungsbahnen 5 und 6 zugewandten Anlageflächen 34 und 35 der jeweils zweiten Absätze 10 und 11 beider Profilschienen 1 und 2 drücken.

Die beiden Profilschienen 1 und 2 weisen zusätzlich Paßflächen 36 und 37 auf, mit denen die in Fig. 2 gezeigte Einheit in ein hier nicht dargestelltes Gehäuse eingesetzt werden kann.

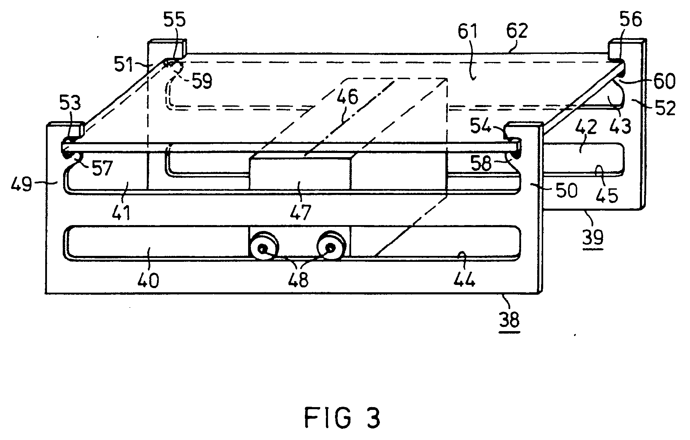

Bei dem in Fig. 3 dargestellten Ausführungsbeispiel der erfindungsgemäßen Abtasteinrichtung sind zwei Gestellteile 38 und 39 in Form von Platten mit ausgestanzten Aussparungen 40 und 41 bzw. 42 und 43 ausgebildet. Die mit 40 und 42 bezeichneten Aussparungen bilden an ihren unteren Kanten jeweils eine Führungsbahn 44 bzw. 45. Auf den beiden Führungsbahnen 44 und 45 ist ein eine zeilenförmige Lichtempfangseinrichtung 46 tragender Abtastschlitten 47 über Rollen 48 verfahrbar gelagert. Als Folge der Aussparungen 41 und 43 weisen die beiden Platten 38 und 39 vorspringende Halterungsteile 49, 50, 51 und 52 mit den Führungsbahnen 44 und 45 zugewandten Anlageflächen 53 und 54 bzw. 55 und 56 auf. Nach oben gebogene Ansätze 57, 58, 59 und 60 drücken eine auf ihnen aufliegende Auflageplatte 61 mit ihrer Auflagefläche 62 für eine hier nicht gezeigte Vorlage gegen die Anlageflächen 53 bis 56. Durch Ausstanzen der Aussparungen 40 bis 43 wird ein sehr genauer Abstand zwischen den Führungsbahnen 44 und 45 und den Anlageflächen 53 und 54 bzw. 55 und

56 erzielt.

## Ansprüche

1. Optische Abtasteinrichtung mit einer transparenten Auflageplatte (14) für eine zeilenweise abzutastende Vorlage (15), mit Gestellteilen (1, 2) und mit einem eine zeilenförmige Lichtempfangseinrichtung (9) tragenden Abtastschlitten (7), der unterhalb der Auflageplatte (14) auf zwei parallelen Führungselementen quer zur Zeilenrichtung und parallel zur Auflageplatte (14) verfahrbar gelagert ist, **dadurch gekennzeichnet**, daß die beiden Führungselemente jeweils als eines der Gestellteile (1, 2) mit einer Führungsbahn (5 bzw. 6) als Auflage für den Abtastschlitten (7) und mit zumindest einer der Führungsbahn (5 bzw. 6) zugewandten Anlagefläche (34 bzw. 35) ausgebildet sind und daß die Auflageplatte (14) mit ihrer Auflagefläche (16) für die Vorlage (15) unter Einwirkung von Andruckelementen (32 und 33) stellenweise an den Anlageflächen (34 und 35) anliegt. (Fig. 1 und 2)

2. Optische Abtasteinrichtung nach Anspruch 1, **dadurch gekennzeichnet**, daß die Lichtempfangseinrichtung (9) aus einem optoelektronischen Zeilensensor besteht, der auf dem Abtastschlitten (7) unmittelbar unter der Auflageplatte (14) angeordnet ist.

3. Optische Abtasteinrichtung nach Anspruch 1 oder 2, **dadurch gekennzeichnet**, daß beide Gestellteile jeweils in Form einer Platte (38, 39) mit Aussparungen (40, 41 bzw. 42, 43) ausgebildet sind und daß die Führungsbahnen (44 bzw. 45) und Anlageflächen (53, 54 bzw. 55, 56) Kanten der Aussparungen (40, 41 bzw. 42, 43) sind. (Fig. 3)

4. Optische Abtasteinrichtung nach Anspruch 1 oder 2, **dadurch gekennzeichnet**, daß beide Gestellteile jeweils Profilschienen (1 und 2) sind, die an ihren einander zugewandten Seiten jeweils einen ersten Vorsprung (3 bzw. 4) mit der Führungsbahn (5 bzw. 6) aufweisen, daß ferner beide Profilschienen (1 und 2) an ihren einander zugewandten Seiten jeweils einen zweiten Vorsprung (10 bzw. 11) mit der Anlagefläche (34 bzw. 35) in paralleler Ausrichtung zur Führungsbahn (5 bzw. 6) aufweisen und daß die Auflageplatte (14) an zwei parallelen Kanten mit ihrer Auflagefläche (16) an den Anlageflächen (34 und 35) anliegt.

5. Optische Abtasteinrichtung nach Anspruch 4, **dadurch gekennzeichnet**, daß beide Profilschienen (1 und 2) jeweils zwischen ihrem ersten Vorsprung (3 bzw. 4) und ihrem zweiten Vorsprung (10 bzw. 11) einen dritten Vorsprung (12 bzw. 13) aufweisen, zwischen dem und der Auflageplatte (14) das jeweilige Andruckelement (32 bzw. 33) angeordnet ist.

6. Optische Abtasteinrichtung nach Anspruch 5, **dadurch gekennzeichnet**, daß das jeweilige Andruckelement (32 bzw. 33) aus einem elastischen Streifen besteht, der in einer Nut (30 bzw. 31) des jeweiligen dritten Vorsprungs (12 bzw. 13) liegt.

7. Optische Abtasteinrichtung nach einem der vorangehenden Ansprüche, **dadurch gekennzeichnet,** daß der Abtastschlitten (7) auf einer von beiden Führungsbahnen (5 und 6) einfach und auf der jeweils anderen Führungsbahn zweifach gelagert ist.

8. Optische Abtasteinrichtung nach einem der vorangehenden Ansprüche, **dadurch gekennzeichnet,** daß der Abtastschlitten (7) Rollen (18 und 19) aufweist, mit denen er auf den Führungsbahnen (5 und 6) aufliegt.

9. Optische Abtasteinrichtung nach einem der Ansprüche 1 bis 7, **dadurch gekennzeichnet,** daß der Abtastschlitten Gleitstücke aufweist, mit denen er auf den Führungsbahnen aufliegt.

10. Optische Abtasteinrichtung nach einem der Ansprüche 4 bis 9, **dadurch gekennzeichnet,** daß die Führungsbahnen (5 und 6) seitlich durch ansatzförmige Führungsstreifen (25 bzw. 26) an den jeweils ersten Vorsprüngen (3 und 4) der beiden Profilschienen (1 und 2) begrenzt sind.

11. Optische Abtasteinrichtung nach einem der Ansprüche 4 bis 10, **dadurch gekennzeichnet,** daß der Abtastschlitten (7) die jeweils ersten Vorsprünge (3 und 4) der Profilschienen (1 und 2) untergreifende Gegenlager (20 und 21) aufweist.

12. Optische Abtasteinrichtung nach einem der Ansprüche 4 bis 11, **dadurch gekennzeichnet,** daß beide Profilschienen (1 und 2) jeweils im Bereich zwischen dem ersten Vorsprung (3 bzw. 4) und dem zweiten Vorsprung (10 bzw. 11) einen den Bewegungsspielraum des Abtastschlittens (7) in Richtung auf die Auflageplatte (14) begrenzenden Anschlag (28 bzw. 29) aufweisen.

13. Optische Abtasteinrichtung nach einem der Ansprüche 4 bis 12, **dadurch gekennzeichnet,** daß die beiden Profilschienen (1 und 2) jeweils zur Aufnahme von Vorlagenführungseinrichtungen (17) über die Begrenzung der Auflageplatte (14) quer zur Zeilenrichtung hinausragen.

## Claims

1. Optical scannning device with a transparent support plate (14) for a copy (15) to be scanned line by line, having frame portions (1, 2) and a scanning carriage (7) carrying a line-shaped light receiving device (9) which is movably mounted below the support plate (14) transversely to the line direction and parallel to the support plate (14) on two parallel guide elements, characterised in that the two guide elements are each constructed as one of the frame portions (1, 2) with a guideway (5 or 6) as a support for the scanning carriage (7) and with at least one contact surface (34 or 35) facing the guideway (5 or 6) and in that the support plate (14) with its support surface (16) for the copy (15) abuts the contact surfaces (34 and 35) locally, being acted on by pressure elements (32 and 33). (Fig. 1 and 2).

2. Optical scanning device according to claim 1, characterised in that the light receiving device (9) comprises an optoelectronic line sensor which is arranged on the scanning carriage (7) directly under the support plate (14).

3. Optical scanning device according to claim 1 or 2, characterised in that both frame portions are each constructed in the form of a plate (38, 39) with recesses (40, 41 or 42, 43) and in that the guideways (44 or 45) and contact surfaces (53, 54 or 55, 56) are edges of the recesses (40, 41 or 42, 43) (Fig. 3).

4. Optical scanning device according to claim 1 or 2, characterised in that both frame portions are respectively profiled rails (1 and 2) which each have on their facing sides a first projection (3 or 4) with the guideway (5 or 6), in that in addition both profiled rails (1 and 2) have on their facing sides a second projection (10 or 11) with the contact surface (34 or 35) in parallel alignment with the guideway (5 or 6) and in that the support plate (14) abuts the contact surfaces (34 and 35) at two parallel edges with its support surface (16).

5. Optical scanning device according to claim 4, characterised in that both profiled rails (1 and 2) each have between their first projection (3 or 4) and their second projection (10 or 11) a third projection (12 or 13) between which and the support plate (14) the respective pressure element (32 or 33) is arranged.

6. Optical scanning device according to claim 5, characterised in that the respective pressure element (32 or 33) comprises a resilient strip which lies in a groove (30 or 31) of the respective third projection (12 or 13).

7. Optical scanning device according to one of the preceding claims, characterised in that the scanning carriage (7) is mounted singly on one of the two guideways (5 and 6) and doubly on the respective other guideway.

8. Optical scanning device according to one of the preceding claims, characterised in that the scanning carriage (7) has rollers (18 and 19) with which it rests on the guideways (5 and 6).

9. Optical scanning device according to one of claims 1 to 7, characterised in that the scanning carriage has sliders with which it rests on the guideways.

10. Optical scanning device according to one of claims 4 to 9, characterised in that the guideways (5 and 6) are limited laterally by bulge-shaped guide strips (25 or 26) on the respective first projections (3 and 4) of the two profiled rails (1 and 2).

11. Optical scanning device according to one of claims 4 to 10, characterised in that the scanning carriage (7) has abutments (20 and 21) engaging under the respective first projections (3 and 4) of the profiled rails (1 and 2).

12. Optical scanning device according to one of claims 4 to 11, characterised in that both profiled rails (1 and 2) each have, in the region between the first projection (3 or 4) and the second projection (10 or 11), a stop (28 or 29) limiting the available space for movement of the scanning carriage (7) in the direction of the support plate (14).

13. Optical scanning device according to one of claims 4 to 12, characterised in that the two profiled rails (1 and 2) each project transversely to the line direction over the boundary of the support plate (14) to receive copy guide devices (17).

## Revendications

1. Dispositif optique de balayage comportant une plaque de support transparente (14) pour un modèle (15) à balayer ligne par ligne, avec des éléments de bâti (1, 2) et avec un chariot de balayage (7) qui porte un dispositif de réception de la lumière (9) de forme linéaire, ledit chariot étant monté, en-dessous de la plaque de support (14), sur deux éléments parallèles de guidage pour être déplaçable transversalement à la direction des lignes et parallèlement à la plaque de support (14), caractérisé par le fait que chacun des éléments de guidage est réalisé pour constituer l'un des éléments de bâti (1, 2) avec une voie de guidage (5, 6) qui constitue le support pour le chariot de balayage (7) et avec au moins une surface d'appui (34, 35) dirigée vers la voie de guidage (5, 6), et que la plaque de support (14) porte, par sa surface de support (16) pour le modèle (15) et sous l'action d'éléments de pression (32, 33), par endroits contre la surface d'appui (34, 35). (Figures 1 et 2).

2. Dispositif optique de balayage selon la revendication 1, caractérisé par le fait que le dispositif de réception de la lumière (9) est constitué par un détecteur optoélectronique des lignes, lequel détecteur est disposé sur le chariot de balayage (7), directement en-dessous de la plaque de support (14).

3. Dispositif optique de balayage selon la revendication 1 ou 2, caractérisé par le fait que les deux éléments de bâti sont chacun réalisés sous la forme d'une plaque (38, 39), avec des ouvertures (40, 41 et 42, 43), et que les voies de guidage (44, 45) et les surfaces d'appui (53, 54 et 55, 56), constituent des bords des ouvertures (40, 41 et 42, 43). (Figure 4).

4. Dispositif optique de balayage selon la revendication 1 ou 2, caractérisé par le fait que les deux éléments de bâti sont constitués respectivement par des rails profilés (1 et 2) qui comportent, sur leurs côtés qui se font face, respectivement une première partie saillante (3, 4) avec la voie de guidage (5, 6), qu'en outre, les deux rails profilés (1 et 2) comportent, sur les côtés qui se font face, respectivement une seconde partie saillante (10, 11) avec la surface d'appui (34, 35), avec alignement parallèle par rapport à la voie de guidage (5, 6), et que la plaque de support (14) porte, contre deux bords parallèles et par sa surface de support (16), contre les surfaces d'appui (34 et 35).

5. Dispositif optique de balayage selon la revendication 4, caractérisé par le fait que les deux rails profilés (1 et 2) comportent respectivement, entre leur première partie saillante (3, 4) et leur seconde partie saillante (10, 11), une troisième partie saillante entre laquelle et la plaque de support (14), est disposé l'élément de pression concerné (32, 33).

6. Dispositif optique de balayage selon la revendication 5, caractérisé par le fait que l'élément de pression (32, 33) est constitué par une bande élastique qui se situe dans une gorge (30, 31) de la troisième partie saillante concernée (12, 13).

7. Dispositif optique de balayage selon l'une des revendications précédentes, caractérisé par le fait que le chariot de balayage (7) est monté, une fois, sur l'une des deux voies de guidage (5 et 6), et, deux fois, sur l'autre voie de guidage.

8. Dispositif optique de balayage selon l'une des revendications précédentes, caractérisé par le fait que le chariot de balayage (7) comporte des galets (18, 19) à l'aide desquels il repose sur les voies de guidage (5 et 6).

9. Dispositif optique de balayage selon l'une des revendications 1 à 7, caractérisé par le fait que le chariot de balayage comporte des pièces de glissement à l'aide desquelles il repose sur les voies de guidage.

10. Dispositif optique de balayage selon l'une des revendications 4 à 9, caractérisé par le fait que les deux voies de guidage (5 et 6) sont délimitées, latéralement, par des bandes de guidage rapportées (25, 26) sur respectivement les premières parties saillantes (3 et 4) des deux rails profilés (1 et 2).

11. Dispositif optique de balayage selon l'une des revendications 4 à 10, caractérisé par le fait que le chariot de balayage (7) comporte des contre-appuis (20 et 21) en prise sous-jacente avec respectivement les premières parties saillantes (3 et 4) des rails profilés (1 et 2).

12. Dispositif optique de balayage selon l'une des revendications 4 à 11, caractérisé par le fait que les deux rails profilés (1 et 2) comportent chacun, dans la zone située entre la première partie saillante (3, 4) et la seconde partie saillante (10, 11), une butée (28, 29) qui délimite l'espace du déplacement du chariot de balayage (7) dans la direction vers la plaque de support (14).

13. Dispositif optique de balayage selon l'une des revendications 4 à 12, caractérisé par le fait que les deux rails profilés (1 et 2) s'étendent respectivement au-delà des limites de la plaque de support (14), transversalement à la direction des lignes, en vue de recevoir des dispositifs de guidage des modèles (17).

FIG 1

15

2 9 8 11

16 13

14 7 6 4

10 12 17

5

3

1

8

EP 0 281 501 B1

FIG 2

FIG 3